# FASCICULE DE BREVET EUROPEEN

(11) **EP 3 473 833 B1**
(45) Date de publication et mention de la délivrance du brevet: **24.02.2021**
(21) Numéro de dépôt: 18198031.9
(22) Date de dépôt: 01.10.2018
(51) Int. Cl.: F02C 7/045, B64D 15/04, B64D 33/02, F02C 7/047

(54) **SYSTÈME DE PROTECTION CONTRE LE GIVRE POUR NACELLE DE MOTEUR D'AÉRONEF**
SCHUTZSYSTEM GEGEN VEREISUNG FÜR TRIEBWERKSGONDEL EINES LUFTFAHRZEUGS
ICE PROTECTION SYSTEM FOR AIRCRAFT ENGINE NACELLE

(30) Priorité: 20.10.2017 FR 1759920
(43) Date de publication de la demande: 24.04.2019
(73) Titulaire: Airbus Operations S.A.S., 31060 Toulouse (FR)
(72) Inventeur: CARCONE, Jonathan, 31300 Toulouse (FR); PORTE, Alain, 31770 Colomiers (FR)
(74) Mandataire: Gicquel, Olivier Yves Gérard

(56) Documents cités:
- EP-A2- 0 939 028
- EP-A2- 1 895 123
- WO-A2-2010/086560
- FR-A1- 2 859 500
- FR-A1- 2 995 497
- US-A1- 2017 184 026

## Description

### DOMAINE TECHNIQUE

La présente invention concerne une nacelle de moteur d'aéronef ayant un système de protection contre le givre ainsi qu'un aéronef comprenant une telle nacelle.

### ÉTAT DE LA TECHNIQUE

Les bords d'attaque des aéronefs, en particulier les lèvres d'entrée d'air des nacelles de moteur d'aéronef, peuvent subir la formation de givre qui s'accumule pour constituer des blocs de glace. L'apparition de ces blocs de glace peut perturber l'alimentation en air du moteur. Par exemple, des blocs de glace peuvent se détacher et venir heurter les pales de soufflante de moteur. Ils sont donc susceptibles de fragiliser les pales de soufflante, voire de les casser.

Il existe un système de protection du givre qui prélève de l'air chaud sur des étages de compression du moteur de l'aéronef pour l'injecter dans un l'espace annulaire qui est situé derrière la lèvre de la nacelle. L'air chaud circule alors dans l'espace annulaire chauffe la lèvre et est envoyé dans des canaux de panneaux acoustiques afin de chauffer la peau desdits panneaux acoustiques. Toutefois, la peau des panneaux acoustiques est chauffée sur une courte distance ce qui entraîne un dégivrage sur une courte distance. Cette distance peut être insuffisante pour des entrées d'air très courtes. En effet, le raccourcissement des entrées d'air peut conduire à rendre la surface des panneaux acoustiques aérodynamiquement plus sensibles Le document WO2010/086560 décrit une nacelle d'aéronef comprenant un conduit, une paroi périphérique, une lèvre et un cadre avant reliant la paroi périphérique et le conduit et formant avec la lèvre un espace dans lequel peut circuler de l'air chaud prévu pour le traitement du givre, le conduit comportant un revêtement pour le traitement acoustique en matériau composite, la nacelle comprenant au moins un élément en un matériau conducteur de la chaleur intercalé entre la lèvre et le conduit assurant la continuité des surfaces aérodynamiques de la lèvre et du conduit et la propagation de la chaleur depuis l'espace vers l'arrière de la nacelle, ledit au moins un élément comportant un revêtement pour le traitement acoustique en un matériau résistant à la chaleur. Le document US 2017/0184026 décrit une turbine à gaz comprenant un moteur central et une nacelle entourant au moins partiellement le moteur central. Un système de refroidissement de la turbine à gaz comprend également un caloduc comprenant une première extrémité, une deuxième extrémité et un conduit s'étendant entre les deux. Le caloduc facilite le transfert d'une certaine quantité de chaleur.

### EXPOSÉ DE L'INVENTION

La présente invention a pour objet de pallier ces inconvénients en proposant une nacelle comprenant un système de protection contre le givre.

A cet effet, l'invention concerne une nacelle selon la revendication 1.

Selon l'invention, le système de protection comprend un dispositif échangeur de chaleur comportant au moins un caloduc configuré pour transférer au ou aux panneaux acoustiques de la chaleur émise par une source chaude.

Ainsi, grâce à l'invention, les panneaux acoustiques sont protégés du givre de manière plus efficace et économique grâce au ou aux caloducs. La chaleur émise par une source chaude est utilisée pour dégivrer l'ensemble des panneaux acoustiques de la nacelle et non seulement une partie des panneaux acoustiques situés au voisinage de la lèvre.

Selon l'invention, le dispositif échangeur de chaleur comprend:
- un fluide caloporteur,
- au moins un évaporateur connecté thermiquement à la source chaude, le ou les évaporateurs étant configurés pour extraire au moins une partie de la chaleur fournie par la source chaude, la chaleur extraite étant transférée au fluide caloporteur ;
- au moins un condenseur fixé sur la virole interne, le ou les condenseurs étant configurés pour fournir au moins une partie de la chaleur extraite par le ou les évaporateurs au ou aux panneaux acoustiques, la chaleur extraite étant transférée au ou aux condenseurs par l'intermédiaire du fluide caloporteur ;
chacun des évaporateurs étant relié de manière fluidique à au moins un condenseur par au moins un caloduc dans lequel circule le fluide caloporteur.

En outre, le ou les caloducs comprennent :
- au moins une conduite à vapeur configurée pour transporter, de l'évaporateur au condenseur, le fluide caloporteur vaporisé par la chaleur extraite par l'évaporateur,
- au moins une conduite à liquide configurée pour transporter, du condenseur à l'évaporateur, le fluide caloporteur liquéfié par refroidissement dans le condenseur.

De plus, le ou les condenseurs comprennent un ou des canaux chauffants.

Selon l'invention, la nacelle comprend une lèvre d'entrée d'air formant un bord d'attaque de la nacelle, la lèvre présentant un espace annulaire, l'espace annulaire étant fermé par une cloison interne et étant agencé pour recevoir une alimentation en air chaud, le ou les évaporateurs étant connectés par fixation à la cloison interne, le ou les évaporateurs étant configurés pour extraire au moins une partie de la chaleur fournie à travers la cloison interne par l'air chaud alimentant l'espace annulaire de la lèvre, la chaleur extraite étant transférée au fluide caloporteur.

L'invention concerne également un aéronef, en particulier un avion de transport, équipé d'au moins un moteur entouré par la nacelle décrite précédemment.

Selon un mode de réalisation, l'aéronef comprend au moins un dispositif de chauffage d'air configuré pour produire l'air chaud alimentant l'espace annulaire de chacune des nacelles.

De plus, l'aéronef comprend :
- au moins un tuyau reliant le ou les dispositifs de chauffage d'air à l'espace annulaire de chacune des nacelles, le ou les tuyaux étant configurés pour transporter l'air chaud produit par le dispositif de chauffage d'air à l'espace annulaire de la lèvre,
- au moins une vanne pour chacun des tuyaux configurée pour réguler en pression et en débit l'air chaud circulant dans le ou les tuyaux.

Par ailleurs, le dispositif de chauffage d'air correspond à des étages de compression du moteur entouré par la nacelle.

Selon un autre mode de réalisation, l'aéronef comprend un système électrique correspondant à la source chaude.

Selon une variante de réalisation, le système électrique correspond à un dispositif électrique dédié à la production de chaleur pour le système de protection contre le givre.

Selon une autre variante, le système électrique correspond à un dispositif électrique usuel dédié à l'alimentation électrique de l'aéronef.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue de profil d'un moteur d'aéronef comprenant une alimentation en air chaud de l'espace annulaire de la lèvre,
- la figure 2 représente une coupe longitudinale d'une lèvre comprenant le système de protection contre le givre selon un mode de réalisation,
- la figure 3 représente un écorché en perspective d'une lèvre comprenant le système de protection contre le givre selon un mode de réalisation,
- la figure 4 représente une vue schématique du système de protection contre le givre selon un mode de réalisation,
- la figure 5 représente une vue schématique d'un condenseur selon un mode de réalisation,
- la figure 6 représente une vue de profil d'un aéronef comprenant le système de protection contre le givre selon un mode de réalisation.

### DESCRIPTION DÉTAILLÉE

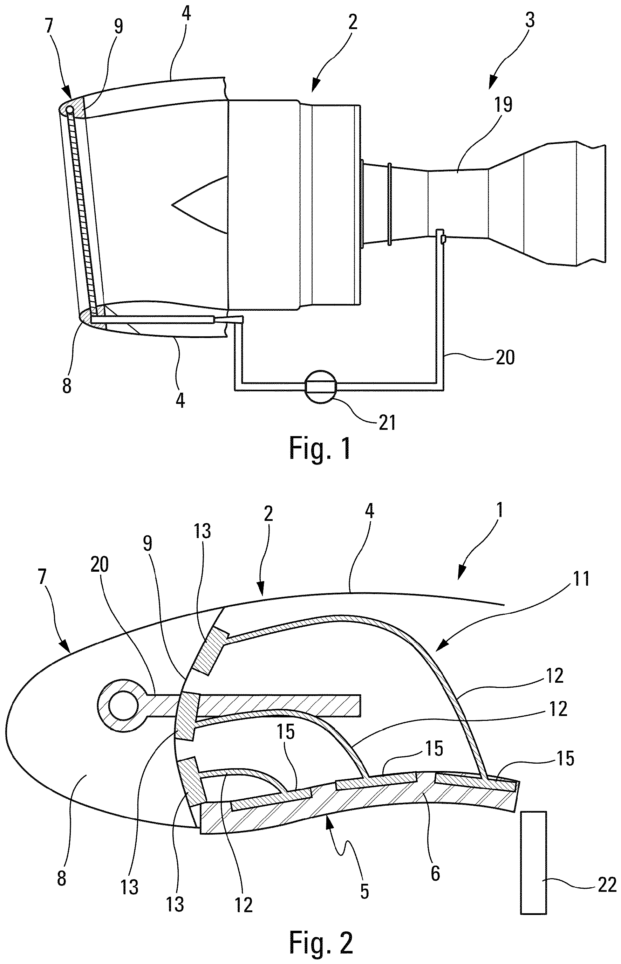

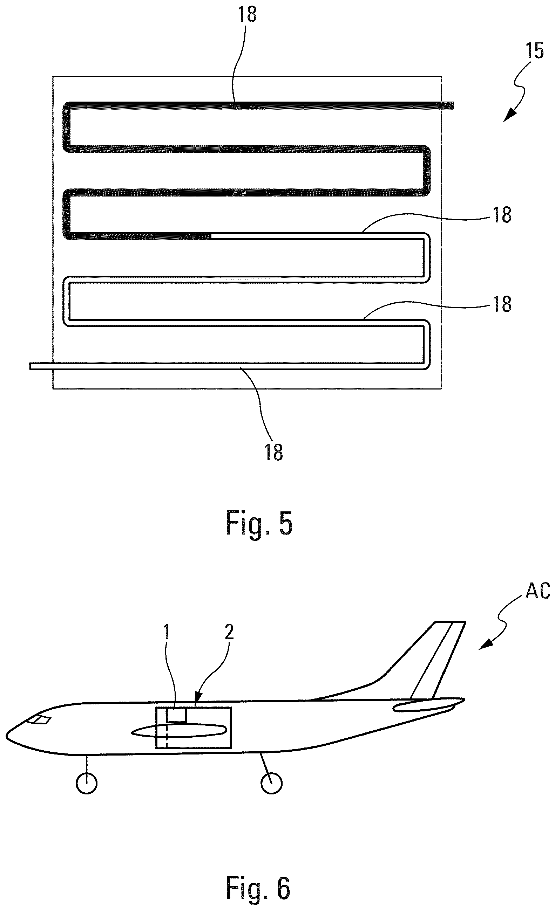

La figure 2 représente schématiquement un mode de réalisation d'un système de protection contre le givre pour une nacelle 2 de moteur 3 d'aéronef AC (figure 6).

Une nacelle 2 de moteur 3 désigne un carénage entourant un moteur 3 d'aéronef AC (figure 1), tel qu'un turboréacteur d'aéronef AC.

Elle comprend généralement une virole externe 4, une virole interne 5 et une lèvre 7 d'entrée d'air. Les deux viroles 4 et 5 sont généralement coaxiales et forment un espace entre elles. La lèvre 7 joint les deux viroles 4 et 5.

La virole externe 4 forme un capot externe de la nacelle 2. La virole interne 5 est pourvue d'au moins un panneau acoustique 6. La lèvre 7 forme un bord d'attaque de la nacelle 2.

Les nacelles 2 sont habituellement équipées de panneaux acoustiques recouvrant la paroi interne des nacelles 2 au niveau des entrées d'air en amont des soufflantes 22. Généralement, les panneaux acoustiques 6 ont une structure de type sandwich comportant une ou plusieurs couches de structure alvéolaire de type nid d'abeille apte à piéger le bruit. Cette couche de structure alvéolaire présente une face externe recouverte d'une couche poreuse, dite peau acoustique, et d'une face interne recouverte d'une couche imperméable, dite peau pleine.

Le système de protection 1 comprend un dispositif échangeur de chaleur 11 configuré pour transférer au ou aux panneaux acoustiques 6 de la chaleur 14 émise par une source chaude.

Le dispositif échangeur de chaleur 11 comprend au moins un caloduc (« heat pipe » en anglais) 12 configuré pour transférer la chaleur 14 de la source chaude au ou aux panneaux acoustiques 6.

Un caloduc 12 désigne généralement un élément conducteur de chaleur fonctionnant selon le principe de transfert thermique par transition de phase d'un fluide.

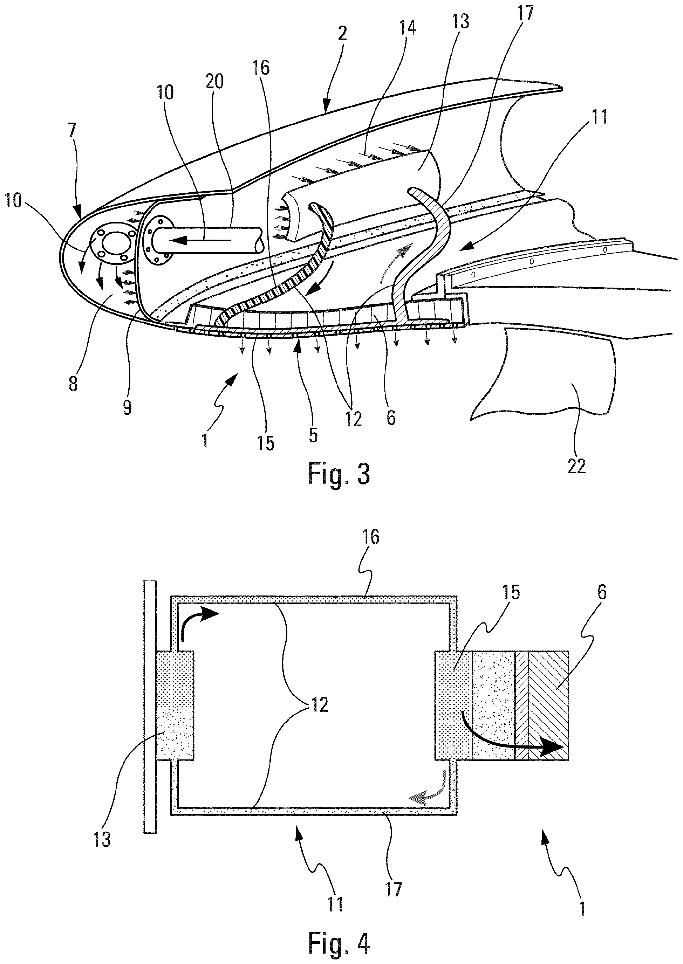

Le dispositif échangeur de chaleur 1 comprend en outre un fluide caloporteur et au moins un évaporateur 13 connecté thermiquement à la source chaude. Le ou les évaporateurs 13 sont configurés pour extraire au moins une partie de la chaleur 14 fournie par la source chaude. La chaleur 14 est alors transférée au fluide caloporteur (figures 2, 3 et 4).

Le dispositif échangeur de chaleur 1 comprend également au moins un condenseur 15 fixé sur la virole interne 5. La chaleur 14 extraite par le ou les évaporateurs 13 est transférée au ou aux condenseurs 15 par l'intermédiaire du fluide caloporteur. Le ou les condenseurs 15 sont configurés pour fournir au moins une partie de la chaleur 14 extraite par le ou les évaporateur 13 au ou aux panneaux acoustiques 6.

Préférentiellement, les condenseurs 15 sont répartis sur l'ensemble de la virole interne 5.

Chacun des évaporateurs 13 est relié de manière fluidique à au moins un condenseur 15 par au moins un caloduc 12 (figures 2, 3 et 4).

Avantageusement, le ou les caloducs 12 comprennent au moins une conduite à vapeur 16 configurée pour transporter, de l'évaporateur 13 au condenseur 15, le fluide caloporteur vaporisé par la chaleur 14 extraite par l'évaporateur 13. Le ou les caloducs 12 comprennent également au moins une conduite à liquide 17 configurée pour transporter, du condenseur 15 à l'évaporateur 13, le fluide caloporteur liquéfié par refroidissement dans le condenseur 15.

La conduite à liquide 17 peut être une conduite permettant le retour du fluide caloporteur liquéfié vers l'évaporateur 13 grâce au principe de gravité ou au principe de capillarité.

Selon un mode de réalisation, le ou les caloducs 12 comprennent un conduit central et un conduit périphérique entourant le conduit central. Le conduit central peut correspondre à la conduite à vapeur 16 et le conduit périphérique peut correspondre à la conduite à liquide 17.

Avantageusement, le ou les condenseurs 15 comprennent un ou des canaux chauffants 18 intégrés dans le ou les panneaux acoustiques 6 (figure 5).

La lèvre 7 présente un espace annulaire 8 qui est fermé par une cloison interne 9. La cloison interne 9 sépare l'espace annulaire 8 du reste de l'espace formé entre les deux viroles 4 et 5.

Généralement, l'espace annulaire 8 est composé de deux conduites en D (« D-duct » en anglais) formant un anneau qui est situé juste derrière le bord d'attaque.

L'espace annulaire 8 de la lèvre est agencé pour recevoir une alimentation en air chaud 10.

Selon un mode de réalisation, la source chaude correspond à la cloison interne 9 chauffée par l'air chaud 10 alimentant l'espace annulaire 8 de la lèvre 7.

De façon non limitative, la cloison interne 9 est généralement chauffée dans des plages de températures allant de 250°C à 450°C.

Avantageusement, au moins un caloduc 12 est configuré pour transférer la chaleur 14 de la cloison interne 9 au ou aux panneaux acoustiques 6.

Le ou les évaporateurs 13 sont ainsi configurés pour extraire au moins une partie de la chaleur 14 fournie à travers la cloison interne 9 par l'air chaud 10 alimentant l'espace annulaire 8 de la lèvre 7. La chaleur 14 est alors transférée au fluide caloporteur (figures 2, 3 et 4).

Préférentiellement, les évaporateurs 13 sont répartis sur l'ensemble de la cloison interne 9.

L'air chaud 10 alimentant l'espace annulaire 8 peut provenir d'un dispositif de chauffage d'air 19 de l'aéronef AC. Le dispositif de chauffage d'air 19 est configuré pour produire l'air chaud 10 alimentant l'espace annulaire 8 de chacune des nacelles 2.

Par exemple, l'aéronef AC comprend au moins un tuyau 20 reliant le ou les dispositifs de chauffage d'air 19 à l'espace annulaire 8 de chacune des nacelles 2. Le ou les tuyaux 20 sont configurés pour transporter l'air chaud 10 produit par le dispositif de chauffage d'air 19 à l'espace annulaire 8 de la lèvre 7. L'aéronef AC comprend également au moins une vanne 21 pour chacun des tuyaux 20 configurée pour réguler en pression et en débit l'air chaud 10 circulant dans le ou les tuyaux 20.

Le ou les tuyaux 20 peut correspondre à des tuyères ou des tubes picolo.

Par exemple, le dispositif de chauffage d'air 19 correspond à des étages de compression du moteur 3 entouré par la nacelle 2. Ainsi, les étages de compression d'un moteur 3 alimente en air chaud 10 l'espace annulaire 8 de la lèvre 7 de la nacelle 2 qui entoure le moteur 3.

Ainsi le dispositif de chauffage 19 alimente en air chaud 10 l'espace annulaire 8 de la lèvre 7. L'air chaud 10 circule alors dans l'espace annulaire 8 de la lèvre 7 et chauffe la cloison interne 9. La chaleur de la cloison interne 9, chauffée par l'air chaud 10, est ensuite extraite par le ou les évaporateurs 13 fixés sur la cloison interne 9. Pour cela, le fluide caloporteur dans le ou les évaporateurs 13 est vaporisé et est amené au ou aux condenseurs 15 par la conduite à vapeur 16 du ou des caloducs 12. La chaleur donc est transmise aux panneaux acoustiques 6 par l'intermédiaire du ou des condenseurs 15 dans lesquels le liquide caloporteur se liquéfie en fournissant la chaleur aux condenseurs 15. Le liquide caloporteur liquéfié retourne ensuite au ou aux évaporateurs 13 par le ou les caloducs 12.

Ce système de protection 1 autorise un transfert efficace de la chaleur de la cloison interne 9 aux panneaux acoustiques 6. En outre, le système de protection 1 permet d'utiliser la chaleur au niveau de la cloison interne 9 chauffée par l'air chaud et donc d'utiliser de manière plus efficace la chaleur fournie par l'air chaud 10 provenant du dispositif de chauffage 19.

Selon un autre mode de réalisation, la source chaude correspond à un système électrique de l'aéronef AC (non représenté).

Selon une variante de ce mode de réalisation, le système électrique correspond à un dispositif électrique dédié à la production de chaleur pour le système de protection 1. Ce dispositif électrique peut être alimenté sur le cœur électrique de l'aéronef AC ou directement sur une génératrice du moteur.

Selon une autre variante, le système électrique correspond à un dispositif électrique usuel dédié à l'alimentation de l'aéronef AC. Par exemple, le dispositif électrique est chauffé plus que nécessaire afin que le dispositif de protection 1 récupère la chaleur excédente.

Grâce à ce mode de réalisation, on évite d'intégrer un système électrique avec les câbles d'alimentation dans le ou les panneaux acoustiques 6.

## Revendications

1. Nacelle de moteur d'aéronef, comprenant une virole interne (5) pourvue d'au moins un panneau acoustique (6), une lèvre (7) d'entrée d'air formant un bord d'attaque de la nacelle (2), la lèvre (7) présentant un espace annulaire (8), l'espace annulaire (8) étant fermé par une cloison interne (9) et étant agencé pour recevoir une alimentation en air chaud (10), et un système de protection contre le givre (1), **caractérisé en ce que** la nacelle comprend un dispositif échangeur de chaleur (11) comportant :
- au moins un caloduc (12) configuré pour transporter un fluide caloporteur et transférer au ou aux panneaux acoustiques (6) de la chaleur (14) émise par une source chaude ;
- au moins un évaporateur (13) connecté thermiquement à la source chaude, le ou les évaporateurs (13) étant configurés pour extraire au moins une partie de la chaleur (14) fournie par la source chaude, la chaleur (14) extraite étant transférée au fluide caloporteur ;
- au moins un condenseur (15) fixé sur la virole interne (5), le ou les condenseurs (15) étant configurés pour fournir au moins une partie de la chaleur (14) extraite par le ou les évaporateurs (13) au ou aux panneaux acoustiques (6), la chaleur (14) extraite étant transférée au ou aux condenseurs (15) par l'intermédiaire du fluide caloporteur ;
chacun des évaporateurs (13) étant relié de manière fluidique à au moins un condenseur (15) par au moins un caloduc (12) dans lequel circule le fluide caloporteur ;
et **en ce que** le ou les évaporateurs (13) sont connectés par fixation à la cloison interne (9), le ou les évaporateurs (13) étant configurés pour extraire au moins une partie de la chaleur (14) fournie à travers la cloison interne (9) par l'air chaud (10) alimentant l'espace annulaire (8) de la lèvre (7), la chaleur (14) extraite étant transférée au fluide caloporteur.

2. Nacelle selon la revendication 1,
**caractérisé en ce que** le ou les caloducs (12) comprennent :
- au moins une conduite à vapeur (16) configurée pour transporter, de l'évaporateur (13) au condenseur (15), le fluide caloporteur vaporisé par la chaleur (14) extraite par l'évaporateur (13),
- au moins une conduite à liquide (17) configurée pour transporter, du condenseur (15) à l'évaporateur (13), le fluide caloporteur liquéfié par refroidissement dans le condenseur (15).

3. Nacelle selon la revendication 2,
**caractérisé en ce que** le ou les condenseurs (15) comprennent un ou des canaux chauffants (18).

4. Aéronef équipé d'au moins un moteur (3)
**caractérisé en ce qu'**il comprend au moins une nacelle selon l'une quelconque des revendications 1 à 3.

5. Aéronef selon la revendication 4,
**caractérisé en ce que**
la source chaude correspond à la cloison interne (9),
le ou les évaporateurs (13) étant connectés par fixation à la cloison interne (9), le ou les évaporateurs (13) étant configurés pour extraire au moins une partie de la chaleur (14) fournie à travers la cloison interne (9) par l'air chaud (10) alimentant l'espace annulaire (8) de la lèvre (7), la chaleur (14) extraite étant transférée au fluide caloporteur,
l'aéronef comprenant au moins un dispositif de chauffage d'air (19) configuré pour produire l'air chaud (10) alimentant l'espace annulaire (8) de chacune des nacelles (2).

6. Aéronef selon la revendication 5,
**caractérisé en ce que** l'aéronef (AC) comprend :
- au moins un tuyau (20) reliant le ou les dispositifs de chauffage d'air (19) à l'espace annulaire (8) de chacune des nacelles (2), le ou les tuyaux (20) étant configurés pour transporter l'air chaud (10) produit par le dispositif de chauffage d'air (19) à l'espace annulaire (8) de la lèvre (7),
- au moins une vanne (21) pour chacun des tuyaux (20) configurée pour réguler en pression et en débit l'air chaud (10) circulant dans le ou les tuyaux (20).

7. Aéronef selon l'une quelconque des revendications 5 ou 6,
**caractérisé en ce que** le dispositif de chauffage d'air (19) correspond à des étages de compression du moteur (3) entouré par la nacelle (2).

8. Aéronef selon la revendication 4,
**caractérisé en ce qu'**il comprend un système électrique correspondant à la source chaude.

9. Aéronef selon la revendication 8,
**caractérisé en ce que** le système électrique correspond à un dispositif électrique dédié à la production de chaleur pour le système de protection contre le givre.

10. Aéronef selon la revendication 8,
**caractérisé en ce que** le système électrique correspond à un dispositif électrique usuel dédié à l'alimentation électrique de l'aéronef (AC).

## Patentansprüche

1. Triebwerksgondel eines Luftfahrzeugs, welche einen Innenring (5), der mit wenigstens einer Akustikplatte (6) versehen ist, eine Lufteinlauflippe (7), die eine Vorderkante der Gondel (2) bildet, wobei die Lippe (7) einen Ringraum (8) aufweist, wobei der Ringraum (8) durch eine innere Trennwand (9) abgeschlossen ist und dafür ausgelegt ist, eine Warmluftversorgung (10) aufzunehmen, und ein Vereisungsschutzsystem (1) umfasst,
**dadurch gekennzeichnet, dass** die Gondel eine Wärmeaustauschvorrichtung (11) umfasst, welche aufweist:
- wenigstens ein Wärmerohr (12), das dafür ausgelegt ist, ein Wärmeträgerfluid zu transportieren und auf die Akustikplatte oder Akustikplatten (6) Wärme (14) zu übertragen, die von einer Wärmequelle abgegeben wird;
- wenigstens einen Verdampfer (13), der mit der Wärmequelle thermisch verbunden ist, wobei der oder die Verdampfer (13) dafür ausgelegt sind, wenigstens einen Teil der von der Wärmequelle gelieferten Wärme (14) zu entziehen, wobei die entzogene Wärme (14) an das Wärmeträgerfluid übertragen wird,
- wenigstens einen Kondensator (15), der an dem Innenring (5) befestigt ist, wobei der oder die Kondensatoren (15) dafür ausgelegt sind, wenigstens einen Teil der durch den oder die Verdampfer (13) entzogenen Wärme (14) der oder den Akustikplatten (6) zuzuführen, wobei die entzogene Wärme (14) über das Wärmeträgerfluid an den oder die Kondensatoren (15) übertragen wird,
wobei jeder der Verdampfer (13) mit wenigstens einem Kondensator (15) durch wenigstens ein Wärmerohr (12), in welchem das Wärmeträgerfluid strömt, fluidisch verbunden ist;
und dadurch, dass der oder die Verdampfer (13) durch Befestigung mit der inneren Trennwand (9) verbunden sind, wobei der oder die Verdampfer (13) dafür ausgelegt sind, wenigstens einen Teil der Wärme (14) zu entziehen, die durch die innere Trennwand (9) hindurch von der Warmluft (10) geliefert wird, die den Ringraum (8) der Lippe (7) versorgt, wobei die entzogene Wärme (14) an das Wärmeträgerfluid übertragen wird.

2. Gondel nach Anspruch 1,
**dadurch gekennzeichnet, dass** das oder die Wärmerohre (12) umfassen:
- wenigstens eine Dampfleitung (16), die dafür ausgelegt ist, vom Verdampfer (13) zum Kondensator (15) das Wärmeträgerfluid zu transportieren, das durch die durch den Verdampfer (13) entzogene Wärme (14) verdampft wurde,
- wenigstens eine Flüssigkeitsleitung (17), die dafür ausgelegt ist, vom Kondensator (15) zum Verdampfer (13) das Wärmeträgerfluid zu transportieren, das durch Kühlung im Kondensator (15) verflüssigt wurde.

3. Gondel nach Anspruch 2,
**dadurch gekennzeichnet, dass** der oder die Kondensatoren (15) einen oder mehrere Heißkanäle (18) umfassen.

4. Luftfahrzeug, welches mit wenigstens einem Triebwerk (3) ausgestattet ist,
**dadurch gekennzeichnet, dass** es wenigstens eine Gondel nach einem der Ansprüche 1 bis 3 umfasst.

5. Luftfahrzeug nach Anspruch 4,
**dadurch gekennzeichnet, dass**
die Wärmequelle der inneren Trennwand (9) entspricht,
wobei der oder die Verdampfer (13) durch Befestigung mit der inneren Trennwand (9) verbunden sind, wobei der oder die Verdampfer (13) dafür ausgelegt sind, wenigstens einen Teil der Wärme (14) zu entziehen, die durch die innere Trennwand (9) hindurch von der Warmluft (10) geliefert wird, die den Ringraum (8) der Lippe (7) versorgt, wobei die entzogene Wärme (14) an das Wärmeträgerfluid übertragen wird,
wobei das Luftfahrzeug wenigstens eine Lufterwärmungsvorrichtung (19) umfasst, die dafür ausgelegt ist, die Warmluft (10) zu erzeugen, die den Ringraum (8) jeder der Gondeln (2) versorgt.

6. Luftfahrzeug nach Anspruch 5,
**dadurch gekennzeichnet, dass** das Luftfahrzeug (AC) umfasst:
- wenigstens ein Rohr (20), das die Lufterwärmungsvorrichtung oder Lufterwärmungsvorrichtungen (19) mit dem Ringraum (8) jeder der Gondeln (2) verbindet, wobei das oder die Rohre (20) dafür ausgelegt sind, die von der Lufterwärmungsvorrichtung (19) erzeugte Warmluft (10) zum Ringraum (8) der Lippe (7) zu transportieren,
- wenigstens ein Ventil (21) für jedes der Rohre (20), das dafür ausgelegt ist, Druck und Durchfluss der in dem oder den Rohren (20) strömenden Warmluft (10) zu regulieren.

7. Luftfahrzeug nach einem der Ansprüche 5 oder 6,
**dadurch gekennzeichnet, dass** die Lufterwärmungsvorrichtung (19) Kompressionsstufen des Triebwerks (3) entspricht, das von der Gondel (2) umgeben ist.

8. Luftfahrzeug nach Anspruch 4,
**dadurch gekennzeichnet, dass** es ein elektrisches System umfasst, das der Wärmequelle entspricht.

9. Luftfahrzeug nach Anspruch 8,
**dadurch gekennzeichnet, dass** das elektrische System einer elektrischen Vorrichtung entspricht, die zur Erzeugung von Wärme für das Vereisungsschutzsystem bestimmt ist.

10. Luftfahrzeug nach Anspruch 8,
**dadurch gekennzeichnet, dass** das elektrische System einer üblichen elektrischen Vorrichtung entspricht, die zur Stromversorgung des Luftfahrzeugs (AC) bestimmt ist.

## Claims

1. Aircraft engine nacelle comprising an internal shroud (5) provided with at least one acoustic panel (6), an air intake lip (7) forming a leading edge of the nacelle (2), the lip (7) having an annular space (8), the annular space (8) being closed by an internal partition (9) and being arranged to receive a supply of hot air (10), and an ice protection system (1), **characterized in that** the nacelle comprises a heat exchanger device (11) comprising:
- at least one heat duct (12) configured to transport a heat transfer fluid and to transfer to the acoustic panel or panels (6) heat (14) emitted by a hot source;
- at least one evaporator (13) thermally connected to the hot source, the evaporator or evaporators (13) being configured to extract at least part of the heat (14) provided by the hot source, the extracted heat (14) being transferred to the heat transfer fluid;
- at least one condenser (15) secured to the internal shroud (5), the condenser or condensers (15) being configured to provide at least part of the heat (14) extracted by the evaporator or evaporators (13) to the acoustic panel or panels (6), the extracted heat (14) being transferred to the condenser or condensers (15) by means of the transfer fluid;
each one of the evaporators (13) being fluidically connected to at least one condenser (15) by at least one heat duct (12) in which the heat transfer fluid flows;
and **in that** the evaporator or evaporators (13) are connected by attachment to the internal partition (9), the evaporator or evaporators (13) being configured to extract at least part of the heat (14) provided through the internal partition (9) by the hot air (10) supplied to the annular space (8) of the lip (7), the extracted heat (14) being transferred to the heat transfer fluid.

2. Nacelle according to Claim 1, **characterized in that** the heat duct or ducts (12) comprise:
- at least one vapour duct (16) configured to transport, from the evaporator (13) to the condenser (15), the heat transfer fluid that has been vaporized by the heat (14) extracted by the evaporator (13),
- at least one liquid duct (17) configured to transport, from the condenser (15) to the evaporator (13), the heat transfer fluid liquefied by cooling in the condenser (15).

3. Nacelle according to Claim 2, **characterized in that** the condenser or condensers (15) comprise one or more heating channels (18).

4. Aircraft equipped with at least one engine (3), **characterized in that** it comprises at least one nacelle according to any one of Claims 1 to 3.

5. Aircraft according to Claim 4, **characterized in that** the hot source corresponds to the internal partition (9),
the evaporator or evaporators (13) being connected by attachment to the internal partition (9), the evaporator or evaporators (13) being configured to extract at least part of the heat (14) provided through the internal partition (9) by the hot air (10) supplied to the annular space (8) of the lip (7), the extracted heat (14) being transferred to the heat transfer fluid,
the aircraft comprising at least one air heating device (19) configured to reduce the hot air (10) supplied to the annular space (8) of each one of the nacelles (2).

6. Aircraft according to Claim 5, **characterized in that** the aircraft (AC) comprises:
- at least one pipe (20) connecting the air heating device or devices (19) to the annular space (8) of each one of the nacelles (2), the pipe or pipes (20) being configured to transport the hot air (10) produced by the air heating device (19) to the annular space (8) of the lip (7),
- at least one valve (21) for each one of the pipes (20), this valve being configured to regulate the pressure and flow rate of the hot air (10) flowing in the pipe or pipes (20).

7. Aircraft according to either one of Claims 5 and 6, **characterized in that** the air heating device (19) corresponds to compression stages of the engine (3) that is surrounded by the nacelle (2).

8. Aircraft according to Claim 4, **characterized in that** it comprises an electrical system corresponding to the hot source.

9. Aircraft according to Claim 8, **characterized in that** the electrical system corresponds to an electrical device intended to produce heat for the ice protection system.

10. Aircraft according to Claim 8, **characterized in that** the electrical system corresponds to a common electrical device intended for supplying the aircraft (AC) with electricity.
